# EUROPEAN PATENT APPLICATION

(11) **EP 1 043 293 A1**
(43) Date of publication of application: **11.10.2000**
(21) Application number: 99943340.2
(22) Date of filing: 14.09.1999
(51) Int. Cl.: C04B 35/80

(54) **CERAMICS-BASED COMPOSITE MATERIAL EXCELLENT IN HIGH-TEMPERATURE DURABILITY**

(30) Priority: 16.09.1998 JP 26193298
(71) Applicant: RESEARCH INSTITUTE OF ADVANCED MATERIAL GAS-GENERATOR, LTD., Tokyo 170-0004 (JP)
(72) Inventor: NAKAYASU, Tetsuo Ube Res. Lab. Ube Ind., Ltd., Ube-shi Yamaguchi 755-0067 (JP)
(74) Representative: Forstmeyer, Dietmar, Dr. rer. nat., Dipl.-Chem.
(86) International application number: JP9905018
(87) International publication number: WO0015577

(57) **Abstract**

A ceramic matrix composite excellent in high-temperature durability which is characterized by having a fiber part comprising inorganic fibers, a matrix part comprising ceramic that is positioned around the fiber part, and an interfacial layer having high-temperature durability that is formed between the fiber part and the matrix part.

## Description

### Technical Field

The present invention relates to a ceramic matrix composite and more particularly to a ceramic matrix composite excellent in high-temperature durability.

### Background Art

Various materials having excellent heat resistance and mechanical characteristics have been developed for use in the aerospace industry, and ceramic matrix composites are typical of them.

In recent years, in particular, the ceramic matrix composites are required to be excellent in mechanical strength, fracture toughness, and the like. In order to improve these physical properties to the demanded levels, necessity of forming an interfacial layer between fibers and the matrix has been suggested, aiming at adjustment of the bonding strength between fibers and the matrix and of the differences between fibers and the matrix in thermal properties, elastic modulus, etc. (see Actametall., vol. 34, No. 12, p. 2435 (1986), Ceramic Bulletin, vol 68, No. 2, p. 395 (1989), ibid, vol. 68, No. 2, p. 429 (1989), J. Am. Ceram. Soc., vol. 73, No. 6, p. 1691 (1990), and Composites, vol. 21, No. 4, p. 305 1990)).

The interfacial layer proposed includes a carbon interfacial layer and a boron nitride interfacial layer. Such an interfacial layer is formed between inorganic fibers and the matrix by using, as inorganic fibers, Si-C fiber ("Hi-Nicalon", a registered trademark, produced by Nippon Carbon Co., Ltd.), Si-C-O fiber ("Nicalon", a registered trademark, produced by Nippon Carbon Co., Ltd.), and SiC fiber ("SCS fiber", a registered trademark, produced by Textron Systems, U.S.A.) which are coated with carbon or boron nitride by chemical vapor deposition, or Si-Ti-C-O fiber having a carbon layer on the surface thereof ("Tyranno Fiber TM-S5 or TY-F1", registered trademarks, produced by Ube Industries, Ltd.). It is known that the composite materials having the carbon interfacial layer or the boron nitride layer exhibit excellent mechanical characteristics in a temperature range from room temperature to relatively high temperatures because the carbon interfacial layer or boron nitride interfacial layer suppresses the reaction between the inorganic fiber and the matrix in high temperature in an oxygen- and steam-free atmosphere (see Ceram. Eng. Sci. Proc., vol. 5, (7-8), p. 513 (1984), M.H. Lewis (ed.), Glasses and Glass-Ceramics, p. 336, Chapman and Hall, London (1989), and Proc. 4th Int. Sympo. Ultra-high Temp. Mater., p. 86, '94 in Tajimi, Nov. 30-Dec. 1, Tajimi (1994)).

However, the carbon forming the carbon interfacial layer reacts with oxygen at 600C°C or higher (see Rikagaku Jiten, Iwanami Shoten), and the boron nitride forming the boron nitride interfacial layer reacts with oxygen at 900°C or higher (see Advanced Ceramics no Shin-tenkai, Toray Research Center). Besides, they easily decompose at lower temperatures m the presence of steam (see Encyclopaedia Chimica, Kyoritu Shuppan). Hence, there is the problem that the carbon interfacial layer or the boron nitride interfacial layer is destroyed due to oxidation or decomposition of carbon or boron nitride while actually used at high temperature in an environment having oxygen and steam such as the air, which is followed by deterioration of mechanical characteristics of the composite material with time (see M.H. Lewis (ed.), Glasses and Glass-Ceramics, p. 336, Chapman and Hall, London (1989), Proc. 4th Int. Sympo. Ultra-high Temp. Mater., p. 86, '94 in Tajimi, Nov. 30-Dec. 1, Tajimi (1994), Y. Bando and K. Kosuge (eds.), Proc. 1993 Powder Metallurgy World Congress, p. 86, Jul. 12-15, Kyoto (1993), and Scripta Metallurgica et Materialia, vol. 31, No. 8, p. 959 (1994)).

### Disclosure of the Invention

Accordingly, an object of the present invention is to provide a ceramic matrix composite which is prevented from reduction of mechanical characteristics in actual use at high temperature even in an environment having oxygen and steam such as the air.

As a result of extensive investigations for the settlement of the above-described problem, the present inventors have found that the above object is accomplished by a ceramic matrix composite having a specific interfacial layer between fibers and the matrix.

Having been reached based on the above finding, the present invention provides a ceramic matrix composite excellent in high-temperature durability which is characterized by having a fiber part comprising inorganic fibers, a matrix part comprising ceramic that is positioned around the fiber part, and an interfacial layer having high-temperature durability that is formed between the fiber part and the matrix part.

### Best Mode for Carrying out the Invention

The ceramic matrix composite according to the present invention will hereinafter be described in detail. The ceramic matrix composite of the invention is composed of inorganic fibers, ceramics, and an interfacial layer between the inorganic fibers and the ceramics. It is composed of a fiber part comprising the inorganic fibers, a matrix part comprising the ceramics which is positioned around the fiber part, and the interfacial layer having high-temperature durability which is formed between the fiber part and the matrix part.

The inorganic fiber used in the present invention is not particularly limited in kind and includes silicon carbide fiber, silicon nitride fiber, alumina fiber, and carbon fiber. It is preferred to use silicon carbide fibers, such as S-C fiber, Si-C-O fiber, Si-Ti- or Zr-C-O fiber. From the standpoint of such characteristics as strength, elastic modulus, heat resistance, oxidation resistance, and creep resistance, it is particularly preferred to use fiber having the following structure (1), fiber having the following structure (2) or fiber having the following structure (3).
Structure (1):
   (a) an amorphous substance substantially comprising Si, Ti and/or Zr, C, and O;
   (b) the amorphous substance (a) and an aggregate of a crystalline substance having a grain size of 1000 nm or smaller, particularly 10 to 500 nm, and comprising β-SiC and TiC and/or ZrC; or
   (c) a mixed system of the crystalline substance described in (b) and an amorphous substance which is present in the vicinity of the crystalline substance and comprises SiOₓ and TiOₓ and/or ZrOₓ (0<x≤2);
      the average elemental composition of (a), (b), and (c) comprising 30 to 80 wt% of Si, 15 to 69 wt% of C, and 0.01 to 20 wt% of O.
Structure (2):
   (d) an amorphous substance substantially comprising Si, C, and O;
   (e) an aggregate of an aggregate of a crystalline substance comprising β-SiC and having a grain size of 1000 nm or smaller, particularly 10 to 500 nm, and amorphous SiO₂ and/or the amorphous substance (d); or
   (f) a mixture of the crystalline substance described in (e) and/or the aggregate (e) and a carbon flocculate,
      the average elemental composition of (d), (e) and (f) comprising 30 to 80 wt% of Si, 10 to 65 wt% of C, and 0.01 to 25 wt% of O.
Structure (3):
   (g) an amorphous substance substantially comprising Si, B and/or Al, C, and O;
   (h) an aggregate substantially comprising β-SiC crystals having a grain size of 0.1 to 10000 nm, with Al and/or B being present on the grain boundaries of the β-SiC crystals and/or B and/or Al being solid dissolved in the vicinity of the grain boundaries of the β-SiC crystals;
   (i) the amorphous substance (g) and an aggregate of a crystalline substance having a grain size of 10000 nm or smaller, particularly 1 to 5000 nm, and comprising β-SiC, B₄C and/or Al₄C₃ and/or Al₂C₆ and/or Al₄SiC₄ and/or Al₄Si₂C₅ and/or Al₈C₄C₇; or
   (j) a mixed system of the crystalline substance described in (i) and an amorphous substance which exists in the vicinity of the crystalline substance and comprises SiO₂, B₂O₃ and/or Al₂O₃,
      the average elemental composition of (g), (h), (i), and (j) comprising 30 to 80 wt% of Si, 15 to 69 wt% of C, and 0.001 to 25 wt% of O.

The above-mentioned structures (1), (2), and (3) are described in more detail. The term "an aggregate of a crystalline substance" as used in the structure (1)-(b) denotes an aggregate comprising a plurality of crystals having a grain size of 0.1 to 1000 nm. The phrase "in the vicinity of" as used in the structure (1)-(c) preferably means the area within a distance of 100 nm from the crystalline grains. From the viewpoint of strength, elastic modulus, heat resistance, oxidation resistance, creep resistance, and the like, it is preferred for any of the structures (a), (b) and (c) to have the above-specified average elemental composition of Si, C and O. A still preferred elemental composition comprises 40 to 70 wt% of Si, 20 to 40 wt% of C, and 0.01 to 20 wt% of O.

The term "an aggregate of a crystalline substance" as used in the structure (2)-(e) has the same meaning as that used in the structure (1)-(b). The language "an aggregate of an aggregate of a crystalline substance and amorphous SiO₂ and/or the amorphous substance (d)" as used in the structure (2)-(e) is intended to mean an aggregate of a plurality of aggregates each comprising an aggregate of crystals having a grain size of 0.1 to 1000 nm and a plurality of amorphous SiO₂ particles and/or a plurality of the amorphous particles (d), the plurality of amorphous particles gathering in the vicinity (in the above-defined meaning) of the aggregate of crystals. The term "carbon flocculate" as used for the structure (f) means a plurality of crystalline and/or amorphous carbon particles having a particle size of 1000 A or smaller. It is preferred for any of the structures (d) to (f) to have the above-specified average elemental composition of Si, C and O for strength, elastic modulus, heat resistance, oxidation resistance, creep resistance, and the like. A still preferred elemental composition comprises 40 to 70 wt% of Si, 20 to 40 wt% of C, and 0.01 to 20 wt% of O.

The language "in the vicinity of the grain boundaries" as used in the structure (3)-(h) preferably means the area around a crystal grain within a distance of 1/3 of the crystal grain size. The term "an aggregate of a crystalline substance" as used in the structure (3)-(i) has the same meaning as that used in the structure (1)-(b). The term "in the vicinity of'" as used in (j) has the same meaning as in (c) of the structure (1). It is preferred for any of the structures (g) to (j) to have the above-specified average elemental composition of Si, C and O from the standpoint of strength, elastic modulus, heat resistance, oxidation resistance, creep resistance, and the like. A still preferred elemental composition comprises 50 to 75 wt% of Si, 25 to 35 wt% of C, and 0.001 to 15 wt% of O.

The above-described inorganic fiber may be the inorganic fiber commercially available from Ube Industries, Ltd. under a registered trademark "Tyranno Fiber" which comprises Si-Ti or Zr-C-O, inorganic fiber comprising Si-Al-C, or the inorganic fiber commercially available from Nippon Carbon Co., Ltd. under a registered trademark "Nicalon" or "Hi Nicalon" which comprises Si-C-O.

The diameter of the inorganic fiber is selected appropriately depending on the characteristics required of, or the intended use of the ceramic matrix composite of the invention. Usually, it is preferably 1 to 200 µm, still preferably 5 to 30 µm. The above-described inorganic fiber may be continuous filament fiber or short fiber. Where the inorganic fiber is used in the form of short fiber, a preferred fiber length is usually 1 to 200 mm, particularly 5 to 30 mm, while it is selected appropriately according to the characteristics required of, or the intended use of the ceramic matrix composite of the present invention.

The interfacial layer preferably comprises an amorphous substance substantially comprising Zr, Si, and O and/or a crystalline substance comprising ZrSiO₄ as a main component. It is also preferred for the interfacial layer to comprise an aggregate of grains comprising the above-described amorphous substance and/or the above-described crystalline substance. In either case, the thickness of the interfacial layer is preferably 3 nm or greater, still preferably 10 nm or greater, particularly preferably 10 to 5000 nm. If the thickness is less than 3 nm, the interfacial layer tend to fail to function, resulting in reduction of physical properties of the ceramic matrix composite. The term "substantially" is used herein to specify the components other than the impurity elements that are originated in the raw materials and/or unavoidably incorporated in the production process. The term "main component" as used herein mean the component except ZrO₂, SiO₂, and the like that are attributable to deviation from the stoichiometric ratio of the raw material composition and/or non-uniformity of the produced phase. Further, the language "an aggregate of grains comprising a crystalline substance" is intended to mean an aggregate of a plurality of crystals having a grain size of 0.1 to 10000 nm.

It is particularly preferred that the interfacial layer comprises a crystalline substance comprising ZrSiO₄ as a main component or an aggregate of grains comprising the crystalline substance from the viewpoint of thermal properties matched to the inorganic fiber and reactivity with the inorganic fiber, the matrix, the oxidized inorganic fiber, or the oxidized matrix.

The thickness of the interfacial layer can be measured under SEM observation on a cut surface. Whether the interfacial layer is amorphous or crystalline is decided by electron ray diffraction of the interfacial layer. Whether or not the interfacial layer contains ZrSiO₄ is seen by analytical electron microscopy, Auger electron spectroscopy, and the like.

The interfacial layer can easily be formed by, for example, subjecting the inorganic fiber to a surface treatment according to the following methods (i) to (iv). As a matter of course, the interfacial layer can be obtained through other methods.
Method (i): A method of forming the interfacial layer on the surface of the inorganic fibers by known chemical vapor deposition (hereinafter, CVD). Raw material gas to be used preferably includes ZrCl₄, ZrOCl₂, Zr(OCₘH₂ₘ₊₁)₄ (m=1 to 4), etc. as a Zr source; and Si(OCₘH₂ₘ₊₁)₄ (m=1 to 4), Si(CₘH₂ₘ₊₁)ₙCl₄₋ₙ (n=0 to 4, m=1 to 6), SiHₙCl₄₋ₙ (n=0 to 4), etc. as an Si source. The raw material gas comprises a mixture of gas or vapor of the above-described Zr source and Si source and NO₂ gas and/or O₂ gas and/or H₂O gas, which is well known as a raw material gas of CVD.
Method (ii): A method of forming the interfacial layer on the surface of the inorganic fiber by known physical vapor deposition (hereinafter, PVD). The target to be used is preferably an amorphous substance, a crystalline substance or a mixture thereof whose composition has been adjusted to be the same as the composition of the interfacial layer. While sputtering gas is not particularly limited, an inert gas, such as Ar gas, O₂ gas, etc. are preferably used. A target made up of an alloy of metallic Zr and metallic Si or a combination of metallic Zr and metallic Si which gives a desired composition can also be used. In this case, gas containing an oxygen source, e.g., O₂ gas, which may contain, if desired, an inert gas such as Ar gas is preferably used as sputtering gas.
Method (iii): A method of forming the interfacial layer on the surface of the inorganic fibers by a well-known sol-gel method. Known sol-gel liquids can be used. The sol-gel liquid preferably contains ZrCl₄, ZrOCl₂, Zr(OCₘH₂ₘ₊₁)₄ (m=1 to 4), etc. as a Zr source and Si(OCₘH₂ₘ₊₁)₄ (m=1 to 4), etc. as an Si source.
Method (iv): A method of forming the interfacial layer which comprises adhering powder comprising an amorphous substance substantially comprising Zr, Si, and O and/or a crystalline phase comprising ZrSiO₄ as a main component onto the surface of the inorganic fibers. Adhesion of the powder to the surface of the inorganic fibers can be effected in a known manner, for example, by immersing the inorganic fibers in a slurry of the powder followed by drying or by firmly adhering the powder on the surface of the inorganic fibers by electrophoretic deposition while the fibers are soaked in the slurry.

Where any of the above-described methods (i) to (iv) is adopted to form the interfacial layer on the inorganic fiber surface, production of the inorganic fiber and formation of the interfacial layer may be carried out successively.

The ceramics which can be used in the present invention include one or more kinds of ceramics selected from the group consisting of oxides, carbides, nitrides, borides and silicides, which are crystalline or amorphous, and particle-dispersed strengthened ceramics thereof.

Specific examples of the oxides are oxides of such elements as aluminum, magnesium, silicon, yttrium, calcium, titanium, zirconium, niobium, iron, copper, barium, zinc, strontium, beryllium, indium, uranium, tantalum, neodymium, scandium, ruthenium, rhodium, tin, nickel, cobalt, molybdenum, manganese, germanium, lead, hafnium, etc. and complex oxides of these elements. In addition to the oxides described above which are amorphous, usable amorphous oxides include silicate glass, phosphate glass, and borate glass. In addition to mixtures of crystalline ceramics and amorphous ceramics, crystallized glass (glass-ceramics) are also useful. Specific examples of the crystallized glass include LiO₂-Al₂O₃-MgO-SiO₂ and LiO₂-Al₂O₃-MgO-SiO₂-Nb₂O₅ crystallized glass whose predominant crystal phase is β-spodumene, MgO-Al₂O₃-SiO₂ crystallized glass whose predominant crystal phase is cordierite, BaO-Al₂O₃-SiO₂ crystallized glass whose predominant crystal phase is mullite or celsian, and CaO-Al₂O₃-SiO₂ crystallized glass whose predominant crystal phase is anorthite.

The carbides include those of such elements as silicon, titanium, zirconium, aluminum, uranium, tungsten, tantalum, hafnium, boron, iron, manganese, molybdenum, etc. and complex carbides of these elements.

The nitrides include those of such elements as silicon, titanium, zirconium, aluminum, magnesium, hafnium, boron, molybdenum, etc., complex nitrides of these elements, and sialon.

The borides include those of such elements as titanium, yttrium, lanthanum, etc. and platinum group metal lanthanide borides, such as CeCo₃B₂, CeCo₄B₄, and ErRh₄B₄.

The silicides include those of such elements as molybdenum, nickel, niobium, etc.

Solid solutions of the above-enumerated various ceramics can also be used as the ceramic.

Specific examples of the aforementioned ceramics include ceramic materials comprising the above-described ceramics, such as oxides, having uniformly dispersed therein 0.1 to 60 vol% of granular, polygonal, plate-like and/or rod-like particles of at least one inorganic substance selected from silicon nitride, silicon carbide, zirconium oxide, magnesium oxide, aluminum oxide, potassium titanate, magnesium borate, zinc oxide, titanium boride, and mullite. The granular particles and polygonal particles preferably have a particle size of 0.1 µm to 1 mm, and the plate-like particles and rod-like particles preferably have an aspect ratio of 1.5 to 1000.

As stated above, the ceramic matrix composite of the present invention has a fiber part comprising inorganic fibers, a matrix part comprising ceramics that is positioned around the fiber part, and an interfacial layer having high-temperature durability that is formed between the fiber part and the matrix part.

The fiber part is a part made up of the above-described inorganic fibers. The shape of the fiber part corresponds to the form of the inorganic fibers as arranged. For example, when a plurality of layers of woven fabric, sheeting, nonwoven fabric, etc. are laid up at prescribed intervals, there is formed a fiber part comprising a plurality of layers. When an aggregate at e.g., short cut fibers of the above-described inorganic fiber is used, the formed fiber part is an integral body. For manifestation of the characteristics of the ceramic matrix composite, the amount of the fiber part is preferably 5 to 85 vol%, particularly 20 to 60 vol%, based on the total ceramic matrix composite.

Where a plurality of plain weave sheets are arranged to form the fiber part, the matrix part is disposed around each fiber part and between every adjacent two sheets to form the outer shape of the ceramic matrix composite. For manifestation of the characteristics of the ceramic matrix composite, the amount of the ceramic matrix is preferably 14.5 to 94.5 vol%, particularly 40 to 80 vol%, based on the total ceramic matrix composite.

The interfacial layer has high-temperature durability. Accordingly, even when, for example, silicon oxide is generated on the surface of the inorganic fibers or in the matrix due to oxidation reaction during use of the ceramic matrix composite, no reaction takes place between the silicon oxide and the interfacial layer. As a result, the mechanical characteristics of the composite owing to the integrity of the inorganic fiber and the matrix are not to be impaired. Thus, the ceramic matrix composite of the invention is excellent in high-temperature durability.

Although the reason why the interfacial layer does not react with silicon oxide generated on the inorganic fiber surface or in the matrix is not clear, it is considered that, in case where the interfacial layer comprises, for example, an amorphous substance substantially comprising Zr, Si, and O and/or a crystalline substance mainly comprising ZrSiO₄, there is only one kind of a ZrO₂-SiO₂-based solid solution, which is a ZrSiO₄ crystal phase and that the ZrSiO₄ crystal undergoes phase separation into ZrO₂ and SiO₂ at about 1680°C.

It is preferred for manifestation of the characteristics of the ceramic matrix composite that the interfacial layer be present in an amount of from 0.05 to 20 vol%, particularly 0.05 to 5 vol%, based on the total ceramic matrix composite.

In forming the interfacial layer on the surface of the inorganic fibers in accordance with the above-mentioned methods (i) to (iv), forming the interfacial layer on bundles of the inorganic fibers may precede fabricating woven fabric, sheeting or nonwoven fabric from the inorganic fiber or making an aggregate of short cut fibers. Or, preparation of woven fabric, sheeting, nonwoven fabric from the inorganic fiber or preparation of an aggregate of short cut inorganic fibers may be followed by formation of the interfacial layer.

The ceramic matrix composite of the present invention can easily be produced from the inorganic fibers coated with the interfacial layer and the ceramic in accordance with the following methods (v) to (viii). As a matter of course, the ceramic matrix composite of the present invention can be produced through other methods.
Method (v): The inorganic fibers and a raw material powder of the ceramic are mixed and subjected to a heat treatment or a high-temperature pressing treatment.
Method (vi): The ceramic, which becomes the matrix part, is deposited on the surface of the inorganic fibers by PVD or CVD, and an aggregate of the ceramic-deposited fibers is subjected to a heat treatment or a high-temperature pressing treatment.
Method (vii): The ceramic, which becomes the matrix part, is precipitated in the inside of woven fabric, sheeting or nonwoven fabric of the inorganic fiber or an aggregate of short cut inorganic fibers by chemical vapor impregnation (chemical vapor infiltration, chemical vapor dipping or CVI).
Method (viii): Woven fabric, sheeting or nonwoven fabric of the inorganic fiber or an aggregate of short cut inorganic fibers is impregnated with a polymeric precursor of the ceramic, which becomes the matrix part, e.g., polycarbosilane, polyzirconocarbosilane, polytitanocarbonosilane, perhydropolysilazane, polysilastyrene, polycarbosilazane, polysilazane, or polyborazine, and the impregnated fiber is heat treated in vacuo or in various gas atmospheres, such as Ar gas, N₂ gas, H₂ gas, NH₃ gas or Si(CₘH₂ₘ₊₁)ₙH₄ₙ (n=0 to 4; m=1 to 6) gas.

The methods (v) to (viii) are explained below in detail. In the method (v), where the inorganic fiber is short fibers, the inorganic short fibers and a raw material powder of the ceramic are mixed to prepare a mixture. Where the inorganic fiber is long fibers, woven fabric, nonwoven fabric or sheeting, the fiber layers and a raw material powder of the ceramic are alternately laid up to prepare a laminate. Or, bundles of long fibers having adhered thereon a raw material powder of the ceramic are fabricated into woven fabric, nonwoven fabric or sheeting, which is laid up to prepare a laminate. The mixture or the laminate is formed to a desired shape and then, or at the same time, subjected to a heat treatment to sinter the raw material powder of the ceramic to obtain the ceramic matrix composite of the invention.

In the method (vi), the ceramic, which is to become the matrix part, is adhered on the surface of the inorganic fibers by known CVD or PVD technique.

Gas to be used in CVD is a well-known raw material gas for CVD. Where the ceramic of the matrix part is, for example, a carbide, a mixture of gas or vapor of at least one of halides, hydrides and organometallic compounds of the metal(s) constituting the ceramic (the gas and the vapor will hereinafter be inclusively referred to as a metal-containing gas) and a CₙH₂ₙ₊₂ (n=1 or greater) gas and/or H₂ gas is used. Where the ceramic of the matrix part is a nitride, a mixture of the metal-containing gas and NH₃ gas and/or N₂ gas and/or H₂ gas is used. Where the ceramic of the matrix part is an oxide, a mixture of the metal-containing gas and NO₂ gas and/or O₂ gas and/Or H₂O gas is used. Where the ceramic of the matrix part is a boride, a mixture of the metal-containing gas and a boron halide and/or H₂ gas is used. Where the ceramic of the matrix part is a silicide, a mixture of the metal-containing gas and Si(CₘH₂ₘ₊₁)ₙH₄₋ₙ (n=0 to 4; m=1 to 6) and/or SiHₙCl₄₋ₙ (n=0 to 4) and/or H₂ gas is used.

When PVD is adopted, PVD is performed by using a compound or a mixture having an adjusted composition so as to be the same as or very close to the desired ceramic composition as a target or alternately using a plurality of the targets (compounds or mixtures) to give the same composition as the desired ceramic composition. If necessary, a heat treatment may follow the PVD, thereby to adhere the ceramic onto the inorganic fiber surface.

In the method (vii), the ceramic, which is to become the matrix part, is precipitated inside the structure of the inorganic fibers (the structure is an aggregate of short fibers where the inorganic fiber is short fibers, or the structure is a laminate of fiber layers where the inorganic fiber is woven fabric, nonwoven fabric or sheeting) by using a raw material gas known for CVD in accordance with a well-known CVI technique. The raw material gas is selected from those used in the method (vi) according to the kind of the ceramic becoming the matrix part.

In carrying out CVI, a temperature gradient and/or a raw material gas pressure gradient may be provided in the aggregate of the inorganic short fibers or the laminate of the fiber layers if desired. Further, CVI may be conducted by repeatedly alternating feed of the raw material gas and discharge of a reaction product gas.

In the method (viii), a polymeric precursor of the ceramic is dissolved in an organic solvent good therefor, such as toluene, xylene, or tetrahydrofuran, and the solution is infiltrated into the inorganic fibers, the aggregate of short inorganic fibers or the laminate of the fiber layers. After the solvent is removed, the impregnated fibrous structure is heat-treated to prepare the ceramic matrix composite of the invention. In order to obtain a composite having no voids inside, it is preferred to repeat a series of operations, i.e., impregnation with the polymeric precursor, solvent removal, and heat treatment, several times. In this method, rendering the polymeric precursor inorganic and sintering proceed simultaneously.

The heat treating temperature in the methods (v) to (viii) usually ranges from 800°C to 2000°C. The heat treatment is carried out in an inert atmosphere, such as N₂ gas or Ar gas, in vacuo, or in an reducing atmosphere, such as H₂ gas or CO gas.

The ceramic matrix composite of the present invention exhibits excellent high-temperature durability. That is, even when it is used in high temperature in an environment containing oxygen and steam, the mechanical characteristics of the composite, which owe to the integrity of the inorganic fiber and the matrix, are not impaired. Accordingly, the ceramic matrix composite of the invention is specially useful as a material of various formings in the field of aerospace that are used in an extremely severe environment.

### Examples

The present invention will now be illustrated in greater detail with reference to Examples and Comparative Examples, but it should be understood that the invention is not construed as being limited thereto. Unless otherwise noted, all the parts and percents are given by weight.

### Preparation Example 1 (Preparation of Matrix Material)

In a 5 l three-necked flask were charged 2.5 l of anhydrous xylene and 400 g of sodium and heated to the boiling point of xylene in an N₂ gas stream. Then, 1 l of dimethyldichlorosilane was added thereto dropwise over 1 hour, followed by heating under reflux for 10 hours. The precipitate thus formed was collected by filtration, washed successively with methanol and water to obtain 410 g of polydimethylsilane as white powder.

Separately, 750 g of diphenyldichlorosilane and 124 g of boric acid were heated in n-butyl ether under an N₂ gas stream at 100 to 120°C. The white resinous substance thus formed was heat treated in vacuo at 400°C for 1 hour to obtain 515 g of polyborodiphenylsiloxane. A 8.2 g part of the resulting polyborodiphenylsiloxane and 250 g of the above-obtained polydimethylsilane were mixed and heated to 350°C in a quartz tube equipped with a refluxing tube in an N₂ gas stream and maintained at that temperature for 6 hours while stirring to obtain 138 g of polycarbosilane having a siloxane bond in parts. In 0.3 l of xylene were dissolved 40 g of the polycarbosilane and 7.3 g of titanium tetrabutoxide, and the solution was refluxed at 120°C for 30 minutes in an N₂ gas stream while stirring. Thereafter, xylene was evaporated, and the residue was further heated at 300°C for 1 hour in an N₂ gas stream and allowed to cool to give polytitanocarbosilane which was solid at room temperature.

### Preparation Example 2 (Preparation of Matrix Material)

BaO powder, MgO powder, Al₂O₃ powder and SiO₂ powder were mixed to prepare mixed powder for glass having a total weight of 1000 g at a BaO:MgO:Al₂O₃:SiO₂ ratio of 14:8:28:50. The mixed powder was packed into a platinum crucible, fused by heating to 1600°C or higher, and quenched. The resulting glass was ground to an average particle size of 10 µm or smaller to obtain glass-ceramic powder. The powder will hereinafter be referred to as BMAS glass-ceramic powder.

### Preparation Example 3 (Preparation of Interfacial Layer Material)

A hundred parts of a mixture of zirconium tetraethoxide (Zr(OCH₂CH₂CH₃)₄) and tetraethoxysilane (Si(OC₂H₅)₄) in a ratio of 69.2% and 30.8% was dissolved in 100 parts of isopropyl alcohol by heating under reflux. The resulting solution will hereinafter be referred to as a ZrSiO₄ sol-gel solution.

### Preparation Example 4 (Preparation of Fiber Material)

Commercially available Tyranno Fiber TM (a trade name, produced by Ube Industries, Ltd.) was opened and immersed in a slurry consisting of 20% of commercially available ZrSiO₄ powder (produced by Wako Pure Chemical Industries, Ltd.) and 80% of water and dried to obtain ZrSiO₄ powder-adhered fiber TM.

### Preparation Example 5 (Preparation of Fiber Material)

Commercially available Tyranno Fiber ZMI (a trade name, produced by Ube Industries, Ltd.) was immersed in the ZrSiO₄ sol-gel solution obtained in Preparation Example 3 and dried. The fibers were heated up to 500°C in air stream at a rate of temperature rise of 50°C/hr, maintained at that temperature for 1 hour, and allowed to cool to room temperature to make the infiltrated organic substance inorganic. The immersion and the making the organic substance inorganic were repeated five times to obtain ZrSiO₄-coated fibers. The ZrSiO₄ film of the ZrSiO₄-coated fibers ZMI was found to have a thickness of about 0.5 µm as a result of SEM observation.

### Preparation Example 6 (Preparation of Fiber Material)

ZrSiO₄-coated fiber SA was obtained in the same manner as in Preparation Example 5, except for using commercially available Tyranno Fiber SA (a trade name, produced by Ube Industries, Ltd.). As a result of SEM observation, the thickness of the ZrSiO₄ film of the ZrSiO₄-coated fibers SA was found to be about 0.8 µm.

### Example 1

The ZrSiO₄ powder-adhered fiber TM obtained in Preparation Example 4 was disintegrated and immersed in a mixed solution of 100 parts of the polytitanocarbosilane obtained in Preparation Example 1 and 100 parts of xylene. After deaeration under reduced pressure of 500 Torr, the solution was let to infiltrate into the fiber bundles in an argon atmosphere of 4 atms. The impregnated fiber bundles were heated at 100°C in an argon gas stream to remove xylene by evaporation. The fiber bundles were heated to 1300°C in a nitrogen gas stream at a rate of temperature rise of 50°C/hr in an electric furnace, maintained at that temperature for 1 hour, cooled to 1000°C at a rate of temperature drop of 100°C/hr, and then allowed to cool to room temperature to carry out calcination. The impregnation and calcination were repeated five times to obtain a ceramic matrix composite of the present invention having a fiber part comprising the inorganic fiber, a matrix part comprising the ceramic and positioned around the fiber part, and an interfacial layer formed between the fiber part and the matrix part. The resulting composite was subjected to a tensile test in accordance with "Test method for tensile stress-strain behavior of continuous fiber-reinforced ceramic matrix composites at room temperature and high temperature (PEC-TS CMC 01-1997)" specified in the standards of Petroleum Energy Center, Japan. The results are shown in Table 1.

### Comparative Example 1

A composite was obtained in the same manner as in Example 1, except that Tyranno Fiber TM used in Preparation Example 4 was used as such. The resulting composite was subjected to a tensile test in the air. The results are shown in Table 1.

### Example 2

A ceramic matrix composite of the invention having a fiber part comprising inorganic fibers, a matrix part comprising ceramic and positioned around the fiber part, and an interfacial layer formed between the fiber part and the matrix part was obtained in the same manner as in Example 1, except for using the ZrSiO₄-coated fiber ZMI prepared in Preparation Example 5. The resulting composite was subjected to a tensile test in the air. The results are shown in Table 1.

### Comparative Example 2

A composite was obtained in the same manner as m Example 1, except for using Tyranno Fiber ZMI used in Preparation Example 5 as such. The resulting composite was subjected to a tensile test in the air. The results are shown in Table 1.

### Example 3

The ZrSiO₄ powder-adhered fiber TM obtained in Preparation Example 4 was opened, immersed in a slurry consisting of 20% of the BMAS glass-ceramic powder and 80% of water, wound up, and dried to prepare a unidirectional prepreg sheet.

The resulting prepreg sheets were laid up with the fiber orientation directions being the same to obtain a parallel laminate. The resulting laminate was hot pressed at 1000°C and 10 MPa for 1 hour and then heat treated at 1300°C for 1 hour to prepare a composite of the invention which comprised a fiber part comprising the inorganic fibers, a matrix part comprising the ceramic and positioned around the fiber part, and an interfacial layer formed between the fiber part and the matrix part. A test piece cut out of the resulting composite was subjected to a three-point bending test in the air in accordance with JIS-R1601. The results are shown in Table 2.

### Comparative Example 3

A composite was obtained in the same manner as in Example 3, except for using Tyranno Fiber TM of Preparation Example 4 as it was. The resulting composite was subjected to a three-point bending test in the air. The results obtained are shown in Table 2.

### Example 4

A composite of the invention which comprised a fiber part comprising the inorganic fibers, a matrix part comprising the ceramic and positioned around the fiber part, and an interfacial layer formed between the fiber part and the matrix part was obtained in the same manner as m Example 1, except for using the ZrSiO₄-coated fiber SA obtained in Preparation Example 6. The resulting composite was subjected to a tensile test in the air. The results obtained are shown in Table 3.

### Comparative Example 4

A composite was obtained in the same manner as in Example 1, except for using Tyranno Fiber SA of Preparation Example 6 as it was. The resulting composite was subjected to a tensile test in the air. The results obtained are shown in Table 3.

**TABLE 1**

| | | | Tensile Strength (MPa) | | | | |
|---|---|---|---|---|---|---|---|
| | | | r.t. | 1000°C | 1200°C | 1300°C | 1400°C |
| Ex. | 1 | ZrSO₄ powder-adhered fiber TM | 260 | 240 | 230 | 220 | 210 |
| | 2 | ZrSO₄-coated fiber ZMI | 380 | 380 | 370 | 350 | 320 |
| Comp. Ex. | 1 | Tyranno Fiber TM | 250 | 200 | 180 | 160 | 140 |
| | 2 | Tyranno Fiber ZMI | 310 | 250 | 220 | 190 | 180 |
| Note: 1) Particulars of the interfacial layer and the inorganic fiber material in the composite obtained in Example 1: Interfacial layer: 0.8 µm thick; aggregate of crystals comprising ZrSiO₄ as a main component. Inorganic fiber material: structure: an amorphous substance substantially comprising Si, Ti, C, and O; average elemental composition: Si 55.4%, Ti 2.0%, C 32.4%, O 10.2% 2) Particulars of the interfacial layer and the inorganic fiber material in the composite obtained in Example 2: Interfacial layer: 0.5 µm thick; a crystalline film comprising ZrSiO₄ as a main component. Inorganic fiber material: structure: an amorphous substance substantially comprising Si, Zr, C, and O; average elemental composition: Si 56.6%, Zr 1.0%, C 34.8%, O 7.6% | | | | | | | |

**TABLE 2**

| | Three-Point Bending Strength (MPa) | | | | |
|---|---|---|---|---|---|
| | r.t. | 1000°C | 1100°C | 1200°C | 1300°C |
| Ex. 3 | 940 | 800 | 640 | 500 | 270 |
| Comp. Ex. 3 | 100 | 510 | 360 | 220 | 80 |
| Note: Particulars of the interfacial layer and the inorganic fiber material in the composite obtained in Example 3: Interfacial layer: 0.8 µm thick; an aggregate of crystalline grains comprising ZrSiO₄ as a main component. Inorganic fiber material: structure: an amorphous substance substantially comprising Si, Ti, C, and O; average elemental composition: Si 55.4%, Ti 2.0%, C 32.4%, O 10.2% | | | | | |

**TABLE 3**

| | Tensile Strength (MPa) | | | | |
|---|---|---|---|---|---|
| | r.t. | 1000°C | 1200°C | 1400°C | 1450°C |
| Ex. 4 | 350 | 380 | 370 | 350 | 350 |
| Comp. Ex. 4 | 260 | 250 | 210 | 190 | 150 |
| Note: Particulars of the interfacial layer and the inorganic fiber material in the composite obtained in Example 4: Interfacial layer 0.8 µm thickness; a film of a crystalline substance comprising ZrSiO₄ as a main component. Inorganic fiber material: structure: an aggregate substantially of β-SiC crystals having a grain size of 0.1 to 10000 nm, with Al existing on the grain boundaries of the β-SiC crystals, and Al being solid dissolved in the vicinity of the grain boundaries of the β-Si crystals; average elemental composition: Si 67.8%; Al 1.1%; C 31.0%, O 0.1%. | | | | | |

### Industrial Applicability

The present invention provides a ceramic matrix composite which is prevented from reduction of mechanical characteristics even in use at high temperature in an environment having oxygen and steam.

The ceramic matrix composite of the present invention is useful as a material of various formings useful particularly in the field of aerospace.

## Claims

1. A ceramic matrix composite excellent in high-temperature durability which is characterized by having a fiber part comprising inorganic fibers, a matrix part comprising ceramic that is positioned around the fiber part, and an interfacial layer having high-temperature durability that is formed between the fiber part and the matrix part.

2. A ceramic matrix composite excellent in high-temperature durability as set forth in claim 1, which is characterized in that said interfacial layer has a thickness of 3 nm or more and comprises (i) an amorphous substance substantially comprising Zr, Si, and O and/or a crystalline substance comprising ZrSiO₄ as a main component or (ii) an aggregate of grains comprising said amorphous substance and/or said crystalline substance.

3. A ceramic matrix composite excellent in high-temperature durability as set forth in claim 1, which is characterized in that said inorganic fiber has the following structure (1).
Structure (1):
(a) an amorphous substance substantially comprising Si, Ti and/or Zr, C, and O;
(b) the amorphous substance (a) and an aggregate of a crystalline substance having a grain size of 1000 nm or smaller and comprising β-SiC and TiC and/or ZrC; or
(c) a mixed system of the crystalline substance described in (b) and an amorphous substance which is present in the vicinity of said crystalline substance and comprises SiOₓ and TiOₓ and/or ZrOₓ (0<x≤2);
the average elemental composition of (a), (b), and (c) comprising 30 to 80 wt% of Si, 15 to 69 wt% of C, and 0.01 to 20 wt% of O.

4. A ceramic matrix composite excellent in high-temperature durability as set forth in claim 1, which is characterized in that said inorganic fiber has the following structure (2).
Structure (2):
(d) an amorphous substance substantially comprising Si, C, and O;
(e) an aggregate of an aggregate of a crystalline substance comprising β-SiC and having a grain size of 1000 nm or smaller and amorphous SiO₂ and/or the amorphous substance (d); or
(f) a mixture of the crystalline substance described in (e) and/or the aggregate (e) and a carbon flocculate,
the average elemental composition of (d), (e) and (f) comprising 30 to 80 wt% of Si, 10 to 65 wt% of C, and 0.01 to 25 wt% of O.

5. A ceramic matrix composite excellent in high-temperature durability as set forth in claim 1, which is characterized in that said inorganic fiber has the following structure (3).
Structure (3):
(g) an amorphous substance substantially comprising Si, B and/or Al, C, and O;
(h) an aggregate substantially comprising β-SiC crystals having a grain size of 0.1 to 10000 nm, with Al and/or B being present on the grain boundaries of the β-SiC crystals and/or B and/or Al being solid dissolved in the vicinity of the grain boundaries of the β-SiC crystals;
(i) the amorphous substance (g) and an aggregate of a crystalline substance having a grain size of 10000 nm or smaller, in particular 1 to 5000 nm, and comprising β-SiC, B₄C and/or Al₄C₃ and/or Al₂C₆ and/or Al₄SiC₄ and/or Al₄Si₂C₅ and/or Al₈C₄C₇; or
(j) a mixed system of the crystalline substance described in (i) and an amorphous substance which exists in the vicinity of said crystalline substance and comprises SiO₂, B₂O₃ and/or Al₂O₃,
the average elemental composition of (g), (h), (i), and (j) comprising 30 to 80 wt% of Si, 15 to 69 wt% of C, and 0.001 to 25 wt% of O.

6. A ceramic matrix composite excellent in high-temperature durability as set forth in claim 1, which is characterized in that said ceramic is at least one member selected from the group consisting of a carbide, a nitride, a boride, a silicide, and an oxide.

7. A ceramic matrix composite excellent in high-temperature durability as set forth in claim 1, wherein said interfacial layer is a crystalline substance comprising ZrSiO₄ as a main component or an aggregate of grains comprising said crystalline substance.

8. A ceramic matrix composite excellent in high-temperature durability as set forth in claim 1, wherein said interfacial layer is present in an amount of 0.05 to 20 vol% based on the total ceramic matrix composite.

9. A ceramic matrix composite excellent in high-temperature durability as set forth in claim 2, wherein said interfacial layer has a thickness of 10 to 5000 nm.
